# EUROPÄISCHE PATENTSCHRIFT

(11) **EP 2 064 022 B1**
(45) Veröffentlichungstag und Bekanntmachung des Hinweises auf die Patenterteilung: **04.09.2013**
(21) Anmeldenummer: 07764436.7
(22) Anmeldetag: 05.07.2007
(51) Int. Cl.: B23K 26/04, B23K 26/10, B23K 26/26

(54) **SCHWEISSVORRICHTUNG FÜR ROHRE AUS METALLISCHEN SCHLITZROHR**
WELDING DEVICE FOR METALLIC OPEN SEAM PIPE
DISPOSITIF DE SOUDAGE POUR DES TUYAUX MÉTALLIQUES FENDUS

(30) Priorität: 01.08.2006 DE 102006035702
(43) Veröffentlichungstag der Anmeldung: 03.06.2009
(73) Patentinhaber: Wuppermann Rohrtechnik GmbH, 91593 Burgbernheim (DE)
(72) Erfinder: HARTMANN, Manfred, 57234 Wilnsdorf (DE)
(74) Vertreter: Sparing, Rolf Klaus
(86) Internationale Anmeldenummer: PCT/DE2007/001193
(87) Internationale Veröffentlichungsnummer: WO 2008/014740

(56) Entgegenhaltungen:
- EP-A- 0 088 501
- EP-A- 0 262 363
- EP-A- 0 919 299
- EP-A- 0 934 796
- DE-A1- 3 529 160
- DE-A1- 19 847 867
- DE-C1- 19 834 400
- JP-A- 5 146 885

## Beschreibung

Die Erfindung betrifft eine Vorrichtung gemäß dem Oberbegriff des Anspruchs 1 zum Führen eines Laserbrenners zum Schweißen von Rohren (Schweißvorrichtung), wobei der Radius der Bogenschlene so gewählt ist, dass er zentrisch zum Rohrmittelpunkt ausgerichtet ist und der Laserkopf so gesteuert ist, dass er mittig auf den Schlitz des Rohres gerichtet ist.

In der EP 0262363 wird eine solche Vorrichtung zur kontinuierlichen Herstellung rohrförmiger Körper mittels Laser-Längsnahtschweißens beschrieben.

Die Herstellung von geschweißten Rohren aus metallischem Bandmaterial Ist bekannt (DE 35 29 160 A1). In der Regel wird dabei das zunächst bandförmige Werkstück (metallisches Bandmaterial) kalt einer immer stärkeren Verformung der Ränder unterzogen. Die in der Vorschubeinrichtung ersten Rollenpaare weisen dabei etwas ineinander greifende Formen auf, die das Bandmaterial soweit verbiegen, dass die gekrümmten Ränder zum bisherigen Querschnitt des Bandes etwas mehr als rechtwinklig stehen.

Zur Behebung dieser Inhomogenltäten ist aus der DE 198 34 400 C1 bekannt, das teilweise vorgeformte Rohr in einer ersten Drehstrecke um etwa eine Vierteldrehung zu tordieren und in dieser tordierten Lage im weiteren Vorschub derartig weiter zu verformen, dass der zwischen den Rändern befindliche Schlitz im weiteren Vorschubverlauf verkleinert wird. Die Inhomogenitäten werden nach diesem Verfahren jedoch nicht vermieden.

Es ist bekannt, die bei der Vorformung der Rohre entstehende Naht durch Laser-Schweißen zu schließen.

Inhomoganitäten im geschweißten Rohr und damit zu der Gefahr des Aufspringens unter Belastung.

Aus der DE 698 00 179 T2 ist eine Vorrichtung zum Führen eines Schweißbrenners bekannt, die zum Längsnahtschweißen von Rohren aus metallischem Material dient. Durch ein komplexes Steuerungssystem und durch Analyse eines von einer CCD-Kamera gelieferten Bildes mit dem In ihrer Speicheeinheit gespeicherten Bildes werden Abweichungen der Zentrierung des Laserkopfes auf die Schweißnaht festgestellt. Die Abweichungen werden über eine **Positionssteuerungevorrichtung** korrigiert.

In der DE 198 47 887 A1 wird beschrieben, einen Laserkopf über ein mechanisches Banderkennungssystem zu steuern, Dieses Dokument stellt den technologischen Hintergrund für die vorliegende Erfindung dar. Die erfindungegemäßen Merkmale sind nicht beschrieben. Das mechanische Banderkennungssystem gibt dem Fachmann keinen Hinweis, eine Bogensrhlene einzusetzen.

Aus der JP 05 146 885 A ist bekannt, einen Laserkopf an einer höhenverstellbaren Halterung anzuordnen, mittels derer die Fokuslage eines von dem Laserkopf emittierten Laserstrahis relativ zu dem Schlitzrohr zu steuern ist.

Aufgabe der vorliegenden Erfindung ist daher eine Vorrichtung zum Führen eines Laserbrenners zum Schweißen von Rohren aus metallischem Bandmaterial, bei dem der Laserstrahl genau mittig den bei der Verformung des Rohrs entstandenen Schlitz trifft. Die Schweißnaht soll so ausgeführt werden, dass praktisch keine Inhomogenitäten auftreten. Die Konzeption der neuen Vorrichtung soll so einfach sein, dass sie leicht zu bedienen ist.

Es wurde eine Schweißvorrichtung für Rohre aus metallischem Schlitzrohr (7) bestehend aus einem Gehäuse (10) mit Rohrführung und Halterung (9) des Schlitzrohrs (7) und mit einem in der Halterung (3) befestigten Laserkopf (1) gefunden, das dadurch gekennzeichnet ist, dass eine Bogenschlene (4) **über** eine Befestigung (11) an dem Gehäuse (10) angebracht ist und dass der Lassrkopf, der mit Hilfe einer Vorschubstange (6) und einem Antriebsmotor (5) auf der Bogenschlene (4) in Abhängigkeit vom Verlauf des Schlitzes im Schlitzrohr geführt werden kann, an der Bogenschiene radial über dem Schlitzrohr angeordnet ist.

Mit Hilfe des erfindungsgemaßen Führungs- und Verformungssystems werden Inhomogenitäten des geschweißten Rohres weitgehend ausgeschlossen. Die so hergestellten Rohre springen auch bei Belastung nicht auf. Eine aus der EP 919299 A2 bekannte notwendige Nachbearbeitung der Schweißnaht entfällt.

Durch Verwendung einer Bogenschiene entfällt eine Korrektur des Laserkopfes abhängig von seiner Position.

Im Gegensatz zu den bekannten Vorrichtungen sind aufwendige Korrekturen bei der erfindungsgemäßen Vorrichtung nicht erforderlich, da der Kreisbogen der Bogenschiene und des Schlitzrohres konzentrische Kreise beschreiben. Konzentrische Kreise weisen den gleichen Mittelpunkt auf. Der Mittelpunkt ist hier der Brennpunkt des zu schweißenden Schlitzes des Schlitzrohres.

In einer bevorzugten Ausführungsform der vorliegenden Erfindung ist der Laserkopf mit entsprechenden Radialführungen zentrisch zur Rohrachse ausgerichtet, dass bei der Nachführung stets ein exakt gleicher Radius und Abstand zum Schlitzrohr bleibt, wenn der Laserkopf auf der Bogenschiene dem Schlitz folgend bewegt wird.

In einer anderen bevorzugten Ausführungsform der vorliegenden Erfindung Ist der Laserkopf an der Bogenschiene so befestigt, dass er in der Höhe verstellbar ist. Dies kann beispielsweise durch Befestigung des Laserkopfs an einer Zahnradschiene erfolgen. Über eine Mikrometerschraube kann dann der Laserkopf radial zur Bogenschiene auf und ab bewegt werden. Auf diese kann der Brennpunkt des Laser genau auf den Schlitz des Rohrs fokussiert werden. Gemäß der vorliegenden Erfindung Ist gleiche **Materialdurchdringung** am Schlitzrohr möglich, egal in welcher radialen Position sich das System oder das Schlitzrohr befindet.

Ebenso bleibt der Abstand Schweißsystem und Rohr grundsätzlich exakt gleich.

Wichtigster Vorteil des Laser-Schweißens ist die hervorragende Nahtqualität. Die Schweißgeschwindigkeit liegt in der Regel auch höher als beim WIG-Schweißen. Die **Wärmebeeinflussung** des Rohrmaterials ist jedoch wesentlich geringer als bei dem WIG-Schweißen.

Bei dem Laser-Schweißen wird ein stark gebündelter Lichtstrahl aus nicht diverglerendem Licht auf die Schweißetelle gerichtet. Der Lichtstrahl entsteht In einem optischen Resonator, der aus zwei Spiegeln und zwei Parallelen HF-Elektroden besteht. Die gesamte Energie des Lasers wird auf einen Punkt von etwa 0,25 mm konzentriert. Dies führt zu einer extremen Energledichte von über 3 Millionen W/cm². In der Regel bildet sich an der Schweißstelle ein Dampfkanal mit lonisiertem Metallgas. Die Temperatur liegt bei etwa 25.000 °C. Um den Dampfkanal bildet sich eine Schmelzzone. Das zum Rohr eingeformte Blechband wird unter dem Laserstrahl hindurch bewegt. Hierdurch bildet sich eine kontinuierliche Schweißnaht (Firmemachrift der Firma Dreistern-Werk Maschinenbau GmbH & Co. KG).

Gemäß der vorliegenden Erfindung wird das In bekannter Weise aus metallischem Bandmaterial vorgeformte Rohr mit offenen Kanten (Schlitzrohr) in das erfindungsgemäße Führungs- und Verformungssystem eingeführt, in dem die noch offenen Kanten mit der an sich bekannten Schweißvorrichtung geschlossen werden.

Als metallische **Bandmeterialien** seien Metallbänder (Colls) aus Edelstahl, Blech, Kupfer und Messing, bevorzugt Edelstahl, genannt.

Nach dem Schweißen wird das Rohr zwischen zwei in Vorschubrichtung hinter der Sohweißvorrichtung angeordnete schwimmend gelagerte Seitenrollen bis zur Abkühlung gestützt.

Unter schwimmend gelagerte Seitenrollen im Rahmen der vorliegenden Erfindung sind Rollen zu verstehen, die das Rohr ohne Druck praktisch nur führen und Biege- und/oder Torsionskräfte ausschließen.

Gemaß der vorliegenden Erfindung wird das **Warkstück** nach dem Schweißen durch schwimmend gelagerte Seitenrollen bis zur Abkühlung gestützt. Bevorzugt erfolgt erfindungsgemäß eine Abkühlung bis zu einer Temperatur im Bereich von etwa Raumtemperatur. Damit wird einer dentritischen Gefügeausbildung der Schmelze im Erstarrungszustand entgegengewirkt oder sie wird unterbunden.

Im Rahmen der vorliegenden Erfindung erfolgt die Steuerung des Laserkopfes zu dem Schlitzrohr durch ein mechanisches oder ein optisches Bandkantenerkennungssystem. Die Lage des Loserkopfes zu den offenen Kanten wird erfindungsgemäß über das Banderkennungssystem gesteuert

Mechanische oder optische Bendkantenerkennungssysteme sind an sich bekannt.

Es wurde auch ein Verfahren zum Führen eines Laserbrenners zum Schweißen von Rohren aus metallischem Bandmaterial (Schlitzrohr) gefunden, das dadurch gekennzeichnet ist, dass der Laserkopf an einer Bogenschiene geführt wird, die radial **über** dem Schlitzrohr angeordnet ist,
wobei der Radius der Bogenschiene so gewählt wird, dass er zentrisch zum Rohrmittelpunkt ausgerichtet ist und
wobei der Laserkopf durch Steuerung mittig auf den Schlitz des vorgeformten Rohres gerichtet wird.

Dadurch können die Bandkanten präzise gegeneinander gehalten und kalibriert werden, sogar dann, wenn ungleiche Materialstärken oder **Materlelgeometrien** miteinander verschweißt werden. Die Führung des Laserkopfes kann so geregelt werden, dass ebenso Ungleichmäßigkeiten in den Bandbreiten mit daraus resultierenden abweichendem Grundquerschnitt der zu formenden Rohre automatisch eliminiert werden. Weiterhin ist dadurch die Möglichkeit gegeben, die Kräfte auf jeder Werkstüdckante oder Wandstärke soweit zu optimieren, bis ein optimaler Schmelzprozess egal mit welcher Schweißtechnik, erfolgt.

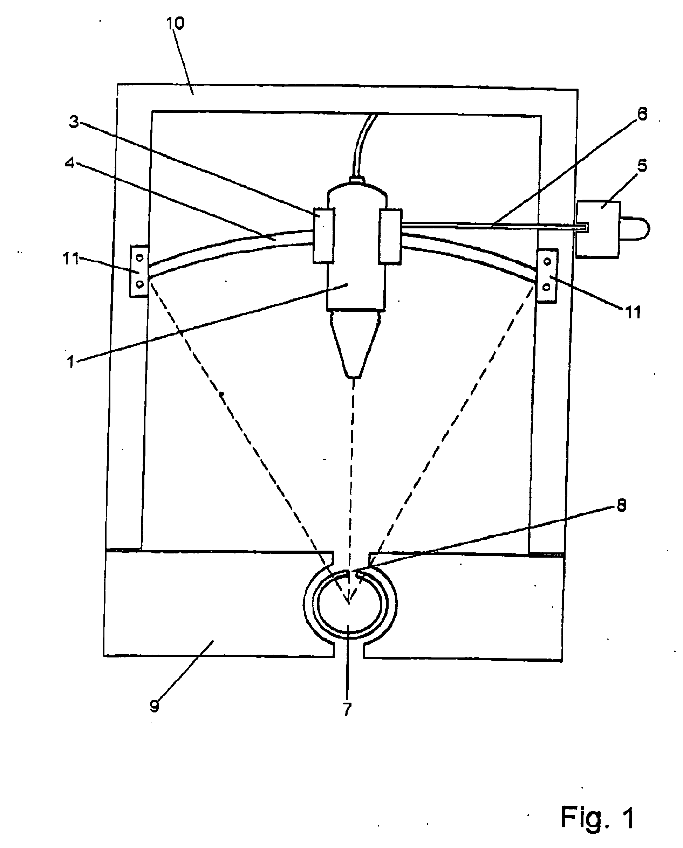

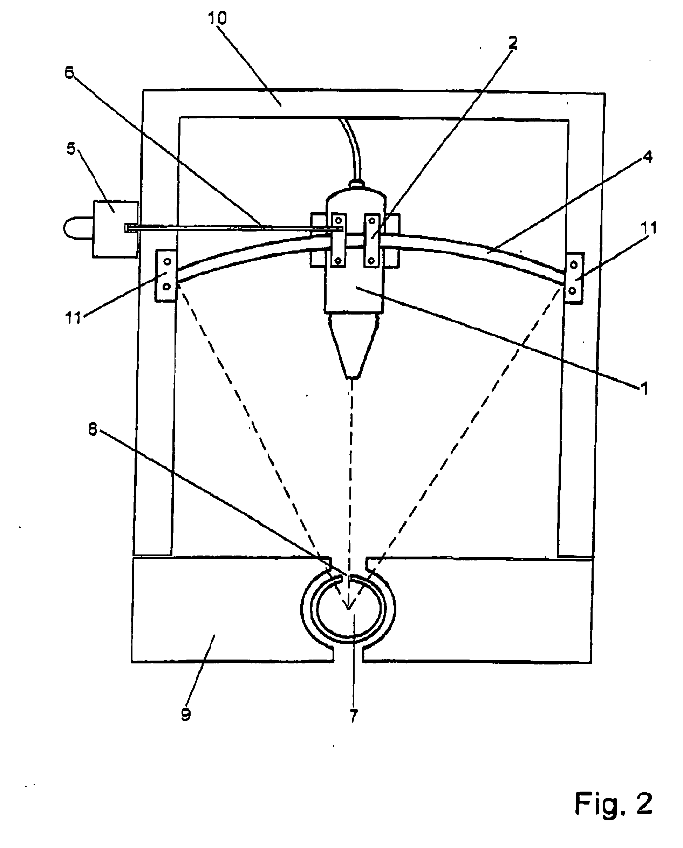

Die vorliegenden Erfindung kann durch die Figuren 1 und 2 erläutert werden.

Figur 1 zeigt die erfindungsgemäße Vorrichtung zum Führen eines Laser. brenners zum Schweißen von Rohren aus metallischem Bandmaterial von vorne.

Figur 1 zeigt den Laserkopf (1), der In der Halterung (3) befestigt ist. Die Halterung (3) ist an der Bogenschiene (4) befestigt. Der Laserkopf (1) kann mit Hilfe der Vorschubstange **(6)** und dem Antriebsmotor (5) auf der Bogenschiene (4) in **Abhänglgkelt** vom Verlauf des Schlitzes im Schlitzrohr (7) geführt werden, so dass der Brennpunkt des Lasers (8) exakt auf den Schlitz fokussiert ist. Das Schlitzrohr (7) wird durch die Rohrführung und Halterung (9) gehalten. Die Bogenschiene (4) ist über der Befestigung (11) am Gehäuse (10) angebracht.

Figur 2 zeigt die erfindungsgemäße Vorrichtung zum Führen eines Laserbrenners zum Schweißen von Rohren aus metallischem Bandmaterial von hinten.

Figur 2 zeigt den Laserkopf (1), der in der Führung In der Halterung (2) zur Höhenverstellung befestigt ist. Die Halterung (3) ist an der Bogenschiene (4) befestigt. Der Laserkopf (1) kann mit Hilfe der Vorschubstange (6) und dem Antriebsmotor (5) auf der Bogenschiene (4) in Abhängigkeit vom Verlauf des Schlitzes im Schlitzrohr (7) geführt werden, so dass der Brennpunkt des Lasers (8) exakt auf den Schlitz fokussiert ist Das Schlitzrohr (7) wird durch die Rohrführung und Halterung (9) gehalten. Die Bogenschiene (4) **ist** über der Befestigung (11) am Gehäuse (10) angebracht.

### BEZUGZEICHENLISTE

- 1.: Laserkopf
- 2.: Führung des Laserkopfs in der Halterung zur Höhenverstellung
- 3.: Laserkopfhalterung
- 4.: Bogenschiene
- 5.: Antriebsmotor
- 6.: Vorschubstange
- 7.: Schlitzrohr
- 8.: Brennpunkt Laser
- 9.: Rohrführungl Halterung
- 10.: Gehäuse
- 11.: Befestigung Bogenschlene

## Patentansprüche

1. Schweißvonkhtung für Rohre aus metallischem Schlitzrohr (7) bestehend aus einem Gehäuse (10) mit Rohrführung und Halterung (9) **des** Schlitzrohrs (7) und mit einem in der Halterung (3) befestigten Laserkopf (1),
**dadurch gekennzeichnet, dass** eine Bogenschiene (4) Ober eine Befestigung (11) an dem Gehäuse (10) angebracht ist und dass der Laserkopf, der mit Hilfe einer Vorschubstange (6) und einem **Antriebsmotor** (5) auf der Bogenschiene (4) in Abhängigkeit vom Verlauf des Schlitzes im Schlitzrohr geführt werden kann,
an der Bogenschiene radial über dem Schlitzrohr angeordnet ist.

2. Schweißvorrichtung nach Anspruch 1, **dadurch gekennzeichnet, dass** die Steuerung des Laserkopfs (1) über ein mechanisches oder optisches Bandkantenerkennungssystem erfolgt.

3. Schwelßvorrichtung nach Anspruch 1 oder 2, **dadurch gekennzeichnet, dass** der Laserkopf (1) mit Hilfe einer höhenverstellbaren Halterung (9) an der Bogenschiene (4) angebracht ist.

## Claims

1. Welding device for pipes comprising a metallic open-seam pipe (7), consisting of a housing (10) with a pipe guide and holder (9) for the open-seam pipe (7) and with a laser head (1) fastened in the holder (3), **characterized in that** a curved rail (4) is attached to the housing (10) by means of a fastening (11) and **in that** the laser head, which can be guided on the curved rail (4) in accordance with the path followed by the open seam in the open-seam pipe with the aid of an advancing rod (6) and a drive motor (5), is arranged on the curved rail radially above the open-seam pipe.

2. Welding device according to Claim 1, **characterized in that** the control of the laser head (1) is performed by means of a mechanical or optical strip edge detection system.

3. Welding device according to Claim 1 or 2, **characterized in that** the laser head (1) is attached to the curved rail (4) with the aid of a heightadjustable holder (9).

## Revendications

1. Dispositif de soudage pour des tuyaux à partir d'un tuyau métallique fendu (7), constitué d'un boîtier (10) avec un guidage de tuyaux et un support (9) du tuyau fendu (7) et avec une tête laser (1) fixée dans la fixation (9),
**caractérisé en ce qu'**un rail cintré (4) est monté par le biais d'une fixation (11) sur le boîtier (10) et **en ce que** la tête laser, qui peut être guidée à l'aide d'une tige d'avance (6) et d'un moteur d'entraînement (5) sur le rail cintré (4) en fonction de la courbe de la fente dans le tuyau fendu, est disposée sur le rail cintré radialement au-dessus du tuyau fendu.

2. Dispositif de soudage selon la revendication 1, **caractérisé en ce que** la commande de la tête laser (1) s'effectue par le biais d'un système de reconnaissance de bord de bande mécanique ou optique.

3. Dispositif de soudage selon la revendication 1 ou 2, **caractérisé en ce que** la tête laser (1) est montée à l'aide d'un support réglable en hauteur (9) sur le rail cintré (4).
